# FASCICULE DE BREVET EUROPEEN

(11) **EP 1 072 613 B1**
(45) Date de publication et mention de la délivrance du brevet: **22.12.2004**
(21) Numéro de dépôt: 00115452.5
(22) Date de dépôt: 18.07.2000
(51) Int. Cl.: C08C 19/44

(54) **Procédé de carbonatation d'un polymère diénique vivant obtenu par voie anionique**
Verfahren zur Karboxylierung eines auf anionischem Wege erhaltenen lebenden Dienpolymer
Process for the carboxylation of a living diene polymer obtained in anionic way

(30) Priorité: 23.07.1999 FR 9909641
(43) Date de publication de la demande: 31.01.2001
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: Robert, Pierre, 63170 Perignat-Les-Sarlieve (FR); Fradin-Cohas, Corinne, 63000 Clermont-Ferrand (FR); Anselme, Bernard, 63430 Pont-du-Chateau (FR)
(74) Mandataire: Hiebel, Robert

(56) Documents cités:
- DD-A- 139 661
- US-A- 3 227 701

## Description

La présente invention concerne un procédé de carbonatation d'un polymère diénique vivant obtenu par voie anionique. Plus précisément, l'invention s'applique à la carbonatation d'un polymère vivant, dont au moins une extrémité de molécule porte un groupe C-M, M étant un métal, et en particulier le Li.

Il est connu de polymériser ou de copolymériser entre eux des diènes conjugués et des composés vinylaromatiques par voie anionique, c'est-à-dire en présence d'un initiateur organométallique, le plus souvent un initiateur organolithié. On obtient ainsi les polymères vivants précités, dont le ou les groupes C-M en extrémité de chaîne sont utilisables pour une réaction de carbonatation ultérieure.

Il est connu de l'homme de l'art que, lors de la carbonatation d'un polymère vivant, la réaction de fonctionnalisation qui a lieu conduit non seulement à un polymère monoadduit possédant une fonction acide carboxylique en extrémité de chaîne (PCO₂H), P étant une chaîne polymère, mais également à des produits secondaires: un bi-adduit (P)₂CO et un tri-adduit (P)₃OH.

On a déjà proposé de nombreuses méthodes pour orienter la réaction de carbonatation vers la formation du monoadduit et éviter la formation des bi et tri-adduits. Par exemple, on peut faire réagir, comme décrit dans le document de brevet Exxon Chemical WO-A-91/04 993 par exemple, l'extrémité de chaîne carbone-métal avec un agent de désactivation, tel que le 1,1-diphényléthylène ou encore l'α-méthylstyrène, puis réaliser la carbonatation en présence d'un diluant polaire (généralement le THF), cela à une température ne dépassant pas 20 °C (typiquement de l'ordre de -10° C).

Une autre voie consiste à faire réagir, comme décrit par R. P. Quirk et Tian Yin dans Macromolécules, vol. 22, p. 85 (1989), la solution de polymère vivant avec du gaz carbonique solide et à une température encore inférieure (de l'ordre de -78° C); en effet, il est connu que l'on diminue la proportion de bi/tri-adduits en abaissant la température.

Par ailleurs, pour régler la proportion des bi/tri adduits, il est admis, de façon générale, que les conditions de mélangeage sont un facteur déterminant (voir J. Villermaux, Génie de la réaction chimique, Conception et fonctionnement des réacteurs, Collection technique et documentation, Edition Lavoisier (2e édition 1985) chapitre 8).

Dans cette optique, il est connu par le document de brevet GB-A-921 803 d'effectuer la réaction de carbonatation du polymère vivant dans une zone de turbulence, par exemple dans un tube en T, zone dans laquelle on introduit une solution de polymère vivant et du gaz carbonique.

Dans ce procédé, on utilise un très grand excès de gaz carbonique représentant 2 à 50 fois la quantité stoechiométrique nécessaire; la réaction est effectuée à froid à une température comprise entre -50° C et 15° C, une grande partie des frigories nécessaires pour refroidir la solution de polymère vivant étant obtenue grâce à la détente du gaz carbonique. Ce dernier est introduit dans une chambre de turbulence au moyen d'un injecteur à une pression de 0,7 à 7.10⁵ Pa.

On connaît également, par les documents de brevet est-allemands DD-A-139 661 et DD-A-236 537, des procédés de carbonatation de polymères vivants consistant essentiellement à atomiser un polymère vivant, par exemple lithié, dans un courant turbulent de gaz carbonique caractérisé par une pression et un débit d'écoulement très élevés. A titre indicatif, ladite pression est fixée à 8 10⁵ Pa, et ledit débit à au moins 2 500 l/h. Quant à la température de carbonatation, elle doit être maintenue dans une plage allant de -20° C à 20° C environ, et elle est de préférence maintenue à 0° C.

Un inconvénient majeur de ces procédés utilisant du gaz carbonique en régime turbulent est qu'ils nécessitent une grande quantité de ce gaz, nettement supérieure à la quantité stoechiométrique. De ce fait, la mise en place d'un système de recyclage et de purification de l'excès de gaz carbonique peut être nécessaire, en raison des contraintes de production et de tonnage qui sont requises à l'échelle industrielle.

Un autre inconvénient de ces procédés réside dans la nécessité de contrôler la température du milieu réactionnel ou des flux entrants, de manière que la température dudit milieu réactionnel se situe en permanence dans une plage restreinte se limitant à des températures relativement basses, afin de permettre un bon rendement de carboxylation.

Le document de brevet américain US-A-3 227 701 divulgue dans ses exemples un procédé de carbonatation qui consiste à atomiser dans une enceinte et au contact de gaz carbonique au repos un polybutadiène vivant. Ce dernier est amené sous pression dans l'enceinte au moyen d'un dispositif de dispersion comportant à sa sortie un disque tournant qui est entraîné par un moteur, et des déflecteurs entourant ledit disque qui sont destinés à diviser les particules de polybutadiène dispersées dans l'enceinte par celui-ci.

Le procédé décrit dans ce dernier document est tel que la température de la réaction de carbonatation est comprise entre -50 et 15 ° C environ, et la pression de gaz carbonique dans l'enceinte varie sensiblement de 10⁵ à 10. 10⁵ Pa.

Un inconvénient majeur de ce procédé réside dans les plages relativement étroites de températures et de pressions qui sont utilisables.

La demanderesse a découvert d'une manière surprenante qu'un procédé de carbonatation d'un polymère diénique vivant obtenu par voie anionique, du type consistant à atomiser par au moins une buse dans une enceinte, sous forme de gouttelettes et au contact de gaz carbonique, cela par la seule différence de pression hydrostatique entre l'entrée de ladite ou de chaque buse et l'intérieur de ladite enceinte, une solution dudit polymère dans un bain sensiblement au repos remplissant ladite enceinte et constitué dudit gaz carbonique, de telle manière que ladite solution atomisée et ledit bain interagissent pour ladite carbonatation,
permet de remédier à l'ensemble de ces inconvénients, tout en procurant un rendement élevé en monoadduit.

On notera que la seule différence de pression hydrostatique qui est utilisée pour l'atomisation procure une division particulière des particules Je solution de polymère vivant atomisées, laquelle permet de disposer d'une plage de température élargie pour la mise en oeuvre de la réaction de carbonatation, cette température pouvant avantageusement varier entre -50° C et 100° C.

En particulier, la température du milieu réactionnel à l'intérieur de l'enceinte, qui est pratiquement égale à celle de la solution de polymère vivant lors de l'atomisation du fait de la contribution massique réduite du gaz carbonique, permet de mettre en oeuvre la réaction de carbonatation à une température supérieure à 15° C, avantageusement à une température proche de celle du milieu ambiant, tout en ayant un rendement élevé en monoadduit, contrairement à l'art antérieur.

On peut toutefois opérer à des températures dans l'enceinte relativement basses, proches de -5° C par exemple.

A titre préférentiel, ledit procédé consiste à utiliser, pour ladite différence de pression hydrostatique, une valeur allant de 10⁵ Pa à 10. 10⁵ Pa et et à utiliser, pour la pression relative du gaz carbonique dans ladite enceinte, une pression comprise entre 0,01. 10⁵ et 10. 10⁵ Pa.

On notera que cette différence de pression hydrostatique qui est utilisée pour l'atomisation détermine par ailleurs, pour une géométrie de buse donnée, le débit d'atomisation de cette buse.

Inversement, le débit utilisé pour la ou chaque buse dépend de la géométrie de la buse, de la viscosité dynamique de la solution de polymère vivant à atomiser et, en majeure partie, de la différence de pression hydrostatique en amont et en aval de la buse. Par exemple, pour une buse matérialisée par une paroi délimitant un orifice circulaire de 0,5 mm de diamètre et ayant une longueur de 2 mm, dans laquelle on atomise une solution dans le toluène de polymère vivant ayant une viscosité dynamique de l'ordre de 0,08 Pa.s, le débit peut varier entre 1 et 30 kg/h lorsque la différence de pression hydrostatique varie entre 1 et 10. 10⁵ Pa. Si on modifie les dimensions de la ou de chaque buse, il est possible de calculer les débits par des méthodes de calcul connues.

On notera que la pression dans l'enceinte est maintenue à une valeur déterminée par introduction de gaz carbonique au fur et à mesure de la réaction pour remplacer le gaz carbonique ayant réagi. Dans ces conditions, il n'y a pratiquement pas de turbulences dans ladite enceinte.

Lorsqu'on utilise plusieurs buses d'atomisation pour la solution de polymère vivant, on détermine, de préférence, l'espacement entre chaque buse de façon qu'il n'y ait pas chevauchement des cônes d'atomisation pour éviter la coalescence des gouttelettes émises.

Avantageusement, ledit procédé consiste à atomiser ladite solution de polymère vivant sous la forme d'un jet de gouttelettes sensiblement en forme de cône creux présentant une section en forme de couronne, de telle manière que lesdites gouttelettes présentent une taille moyenne inférieure à 100 µm.

L'atomisation de la solution de polymère vivant sera d'autant plus fine que l'on souhaitera obtenir un produit encore plus essentiellement constitué de mooadduit possédant une fonction acide carboxylique en extrémité de chaîne. Des écoulements filiformes de la solution de polymère vivant n'empêchent pas la formation de cétone dimère (P)₂CO. Par contre, la formation de gouttelettes permet de diminuer la proportion de cette cétone dimère (P)₂CO. Plus on réduit la taille des gouttelettes de la solution de polymère vivant, plus on obtient généralement une proportion élevée de monoadduit PCO₂H, jusqu'à obtenir un monoadduit pur. La nature du produit rend cependant difficile toute mesure de taille des gouttelettes; il est donc généralement nécessaire de régler par voie expérimentale le degré d'atomisation à adopter pour l'obtention du résultat souhaité.

Selon un mode de réalisation de l'invention, ledit procédé consiste à utiliser une tour à titre d'enceinte, de telle manière que ladite atomisation soit prévue dans une partie supérieure de ladite tour et qu'une solution de polymère carbonaté soit recueillie dans une partie inférieure de ladite tour.

On peut par exemple dans ce cas introduire le gaz carbonique par au moins une entrée latérale prévue dans ladite partie inférieure de ladite tour.

De préférence, ledit procédé consiste à utiliser une viscosité newtonienne inférieure à 2 Pa.s pour ladite solution de polymère vivant, pour son atomisation.

Selon une autre caractéristique de l'invention, ledit procédé consiste à stopper ultérieurement ladite carbonatation dans ladite enceinte en faisant réagir en milieu agité la solution de polymère carbonaté avec un acide suffisamment fort, pour obtenir un polymère carbonaté portant à sa ou ses extrémités de chaîne une ou plusieurs fonctions acide carboxylique.

En effet, le polymère obtenu par réaction des gouttelettes de polymère vivant dans le bain de gaz carbonique est un carboxylate, par exemple un carboxylate de Li. Pour obtenir le polymère portant à sa ou ses extrémités de chaîne une ou plusieurs fonctions acide carboxylique, il est nécessaire de traiter le polymère carbonaté par un acide suffisamment fort, par exemple au moyen d'un acide organique tel que l'acide oxalique, ou d'un acide inorganique tel que l'acide chlorhydrique.

Selon un exemple de réalisation de l'invention, on agite ladite solution de polymère carbonaté dans une cuve qui communique avec ladite enceinte, et l'on atomise en même temps ledit acide sous forme de gouttelettes en direction de ladite cuve.

Avantageusement, on atomise ledit acide par au moins une buse prévue dans ladite partie supérieure de ladite tour, de telle manière que les gouttelettes d'acide puissent entraîner en direction de ladite cuve les particules carbonatées demeurées sur la paroi latérale de ladite tour.

On obtient ainsi un polymère vivant carbonaté qui est constitué pratiquement de polymère possédant une fonction carboxylique en l'une au moins de ses extrémités de chaîne et qui est exempt de produits secondaires, en ayant mis en oeuvre une atomisation d'une solution de polymère vivant dans ledit bain de gaz carbonique sans utilisation d'un gaz vecteur, c'est-à-dire uniquement sous l'effet de la pression hydrostatique.

Le rendement de la carbonatation est fonction du temps de séjour des gouttelettes de polymère vivant dans le gaz carbonique. Par conséquent, dans le cas d'une mise en oeuvre du procédé selon l'invention dans une tour, ce rendement est fonction du temps de chute de ces gouttelettes entre la ou les buses d'atomisation et la zone de récupération de la solution de polymère carbonaté en bas de la tour. La taille des gouttelettes et leur vitesse d'éjection hors de la ou les buses influant sur la vitesse de chute, l'homme de métier choisira donc une hauteur de tour adaptée aux conditions d'atomisation choisies et, comme il sera expliqué ci-après, à la pression du gaz carbonique dans la tour.

Pour une enceinte constituée d'une tour de hauteur donnée et pour une pression relative de gaz carbonique dans ladite tour inférieure à 10⁵ Pa, on peut, en faisant varier cette pression et le débit molaire de gaz carbonique par rapport au débit de la solution de polymère vivant, régler le taux de carbonatation dudit polymère vivant. Pour les pressions relatives de gaz carbonique dans l'enceinte qui sont supérieures à 10⁵ Pa, la carbonatation est généralement totale.

Le procédé de carbonatation selon la présente invention est applicable à la carbonatation de tout polymère vivant.

De façon connue, les polymères vivants sont des homopolymères de diènes conjugués obtenus par polymérisation d'un monomère diène conjugué en C₄-C₁₂ ou des copolymères de plusieurs de ces diènes entre eux ou d'au moins un de ces diènes avec au moins un composé vinylaromatique en C₈-C₂₂.

On notera que l'invention est aussi bien adaptée à la carbonatation de polymères vivants de bas poids moléculaire, typiquement inférieur à 20 000 g/mol, qu'à celle de polymères vivants de haut poids moléculaire, typiquement allant de 100 000 à 300 000 g/mol, sous réserve d'adapter la concentration de la solution pour que l'atomisation soit possible et à condition que la viscosité newtonienne de cette solution soit toujours inférieure à 2 Pa.s.

Parmi les diènes conjugués utilisables, on peut citer le butadiène-1,3, le 2-méthyl 1,3-butadiène, les 2,3-di(alcoyle en C₁-C₁₅)-1,3-butadiène, tels que le 2,3-diméthyl 1,3-butadiène, le 2,3-diéthyl 1,3-butadiène, le 2-méthyl 3-éthyl 1,3-butadiène, le 2-méthyl 3-isopropyl 1,3-butadiène, et également l'isoprène, le phényl 1,3-butadiène, le 1,3-pentadiène et le 2,4-hexadiène.

De préférence, l'homopolymère est un polybutadiène, en particulier un polybutadiène ayant une teneur en unités 1,2 comprise entre 4 et 80 %, ou un polyisoprène.

Parmi les composés vinylaromatiques, on peut citer le styrène, les ortho-, para- et métaméthylstyrènes, en particulier le mélange commercial appelé vinyltoluène, le para-tertiobutylstyrène, les méthoxystyrènes, le vinylmésitylène, le divinyl-benzène et le vinylnaphtalène.

Les copolymères utilisés peuvent contenir de 99 % à 20 % en poids d'unités diéniques et de 1 à 80 % en poids d'unités vinylaromatiques. Parmi les copolymères, on utilise avantageusement des copolymères styrène/butadiène ayant une teneur en styrène comprise entre 4 et 50 % en poids, plus particulièrement entre 20 et 40 % en poids, une teneur en liaison - 1,2 de la partie butadiène comprise entre 4 et 65 % en poids, une teneur en liaison trans-1,4 comprise entre 30 et 80 % en poids. On peut également utiliser des copolymères butadiène/isoprène, en particulier ceux ayant une teneur en isoprène comprise entre 5 et 90 % en poids et une température de transition vitreuse (Tg) comprise entre -40° C et -80° C et des copolymères isoprène/styrène, en particulier ceux ayant une teneur en styrène comprise entre 5 et 50 % en poids et une température de transition vitreuse comprise entre -25 °C et -50 °C. On peut également utiliser les terpolymères butadiéne/styrène/isoprène, en particulier ceux ayant une température de transition vitreuse comprise entre -20 °C et -70 °C et, plus particulièrement, ceux ayant une teneur en styrène comprise entre 5 et 50 % en poids, plus particulièrement entre 10 et 40 % en poids, une teneur en isoprène comprise entre 15 et 60 % en poids, plus particulièrement entre 20 et 50 % en poids, une teneur en butadiène comprise entre 5 et 50 % en poids, plus particulièrement entre 20 et 40 % en poids, une teneur en unités - 1,2 de la partie butadiénique comprise entre 4 et 85 % en poids, une teneur en unités trans-1,4 de la partie butadiénique comprise entre 6 et 80 % en poids, une teneur en unités -1,2 plus -3,4 de la partie isoprénique comprise entre 5 et 70 % en poids et une teneur en unités trans-1,4 de la partie isoprénique comprise entre 10 et 50 % en poids.

Ces polymères sont, de façon connue, préparés par polymérisation en présence d'un initiateur constitué par un (ou des) composé(s) organométallique(s), en particulier organoalcalin(s) et, de préférence, organolithié(s). Parmi les initiateurs organolithiés, on peut citer les organolithiens aliphatiques monolithiés, tels que l'éthyl lithium, le n-butyl lithium, l'isobutyl lithium, le tertiobutyl lithium, le butyl lithium secondaire, ou dilithiés, tels que les polyméthylène dilithium, par exemple le 1,4-dilithiobutane ou le 1,4-dilithiotétraphénylbutane (voir H. Gilman et H. Haubein, J. Am. Chem. Soc., 66, 1515, 1944) : on peut aussi utiliser des amidures de lithium, des composés de terres rares, notamment de néodyme, ou des dérivés du baryum. On pourra se reporter au document de brevet européen EP-A-406 920 pour l'utilisation de terres rares, et au document de brevet français FR-A-2 294 186 pour l'utilisation de dérivés du baryum.

La polymérisation est, de façon connue, généralement effectuée en présence d'un solvant inerte, qui peut être un hydrocarbure aliphatique ou alicyclique comme le pentane, l'hexane, l'iso-octane, le cyclohexane, le méthylcyclohexane ou un hydrocarbure aromatique comme le benzène, le toluène ou le xylène. La solution à polymériser peut également contenir un solvant polaire de type éther, tel que le tétrahydrofuranne, ou de type aminé tel que la tétraméthyl-éthylène-diamine. On peut également ajouter des agents randomisants, tels que les alcoolates de sodium. La polymérisation est généralement effectuée entre 0 et 120 °C, de préférence entre 20 et 100 °C.

Le procédé de carbonatation selon l'invention présente notamment les avantages suivants.

Il est possible de produire le polymère carbonaté avec une quantité minimale de gaz carbonique et il n'est donc pas nécessaire de recycler du gaz carbonique. On peut régler le taux de carbonatation en modifiant la pression dudit gaz dans l'enceinte.

Par ailleurs, le procédé permet de travailler dans une gamme étendue de températures, et notamment à température ambiante sans que le rendement de carbonatation en soit affecté.

De plus, ce procédé permet une production à grande échelle.

Les caractéristiques précitées de la présente invention, ainsi que d'autres, seront mieux comprises à la lecture de la description suivante d'un exemple de réalisation de l'invention, ladite description étant réalisée en relation avec les dessins joints, parmi lesquels:
la Fig. 1 est une vue schématique en coupe d'un dispositif pour la mise en oeuvre du procédé de carbonatation de l'invention selon un exemple de réalisation, et
la Fig. 2 est un médaillon illustrant de deux manières différentes la partie supérieure d'une enceinte de carbonatation comprise dans le dispositif de la Fig. 1, avec de bas en haut dudit médaillon, une vue de dessus schématique de ladite partie supérieure et une vue en coupe de détail de ladite partie.

### EXEMPLE 1:

### Synthèse d'un polybutadiène de basse masse moléculaire comprenant à l'une des deux extrémités de sa chaîne une fonction acide carboxylique.

### 1. Synthèse d'un polybutadiène:

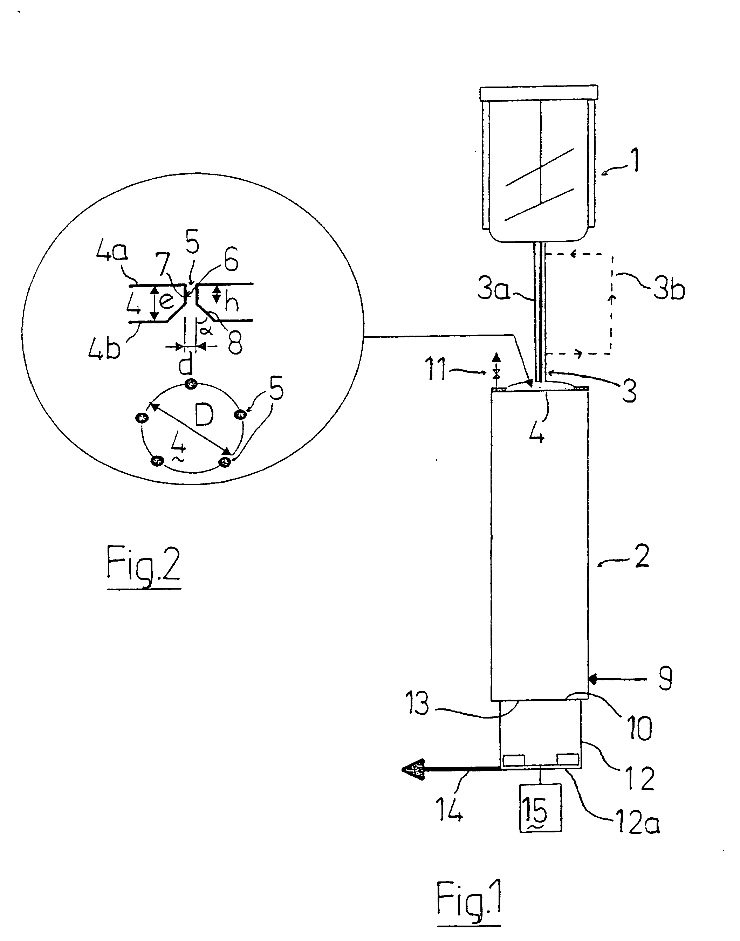

On effectue la polymérisation en discontinu et sous atmosphère inerte dans un réacteur 1 à double enveloppe, d'une capacité de 30 litres (voir Fig. 1).

On introduit dans le réacteur 1:
21,2 litres de toluène désaéré,
1,91 kg de butadiène,
336 ml d'une solution à 1 mol/l de tétrahydrofuranne (THF) dans du toluène (1150 ppm), et
472 ml d'une solution à 1 mol/l de butyllithium dans du toluène, ce qui correspond à 0,025 mol de butyllithium pour 100 g de butadiène.

La température de polymérisation est de 40° C (à plus ou moins 2° C près). La conversion est totale au bout de 30 min. Le polymère obtenu a une masse moléculaire moyenne en nombre (Mn), mesurée par tonométrie, qui est égale à 3500 g/mol. Le taux d'enchaînements vinyliques, déterminé par RMN¹H, est de 40 %.

### 2. Carbonatation du polymère:

Comme on peut le voir à la Fig. 1, on réalise la carbonatation dans une tour de carbonatation 2 de forme cylindrique qui est reliée au réacteur 1 par l'intermédiaire d'une canalisation à double enveloppe 3 constituant un échangeur thermique. L'enveloppe externe 3a de cette canalisation 3 est destinée à recevoir un fluide d'échange tel que de l'eau, qui peut évoluer en circuit fermé 3b (symbolisé en pointillés fléchés).

Comme cela est visible à la Fig. 2, vue du bas, l'extrémité supérieure de la tour 2 comporte une plaque 4, par exemple en acier inoxydable, qui est percée à sa périphérie de plusieurs orifices 5 identiques de section circulaire, qui sont destinés à permettre l'atomisation de la solution de polymère vivant à l'intérieur de la tour 2. Ces orifices 5 sont dans cet exemple centrés sur un cercle qui est lui-même centré sur l'axe longitudinal de la tour 2 et qui présente un diamètre D égal à 20 mm.

Plus précisément, chacun de ces orifices 5 est délimité par une paroi 6, dont le profil est visible à la Fig. 2, vue du haut. Cette paroi 6 relie la face externe 4a à la face interne 4b de la plaque 4. On voit que la paroi 5 comporte un tronçon d'entrée 7 cylindrique perpendiculaire à ladite face 4a, de diamètre d égal à 0,5 mm et de hauteur h égale à 2 mm, qui se prolonge d'une manière centrée par un tronçon de sortie 8 en forme de cône droit, divergeant du tronçon d'entrée 7 d'un angle α voisin de 45° et de hauteur égale à 1 mm. La plaque 4 présente ainsi une épaisseur e de 3 mm.

Comme cela est visible dans l'exemple de la Fig. 1, la tour 2 est pourvue d'une entrée latérale 9 pour l'introduction de gaz carbonique dans son espace interne. Dans cet exemple de réalisation, cette entrée 9 est prévue à proximité de l'extrémité inférieure 10 de ladite tour 2.

La tour 2 comporte également une conduite de dégazage 11, pour réduire sa pression interne en gaz carbonique suite à la carbonatation.

La tour 2 présente dans cet exemple un diamètre de 106 mm et une hauteur de 760 mm.

Une cuve agitée 12 destinée à recevoir et à traiter la solution de polymère carbonaté est prévue en aval de la tour 2. Plus précisément, cette cuve 12 comporte une entrée 13 qui communique avec ladite extrémité inférieure 10 de la tour 2 d'une manière centrée par rapport à celle-ci, et une sortie 14 pour la récupération du polymère carbonaté et traité. Cette cuve 12 est pourvue en son fond 12a d'un agitateur 15, par exemple constitué d'une turbine de type « Rushton ».

Pour ce premier exemple de réalisation, on a mis en oeuvre le procédé de l'invention en procédant à quatre essais, chacun d'eux étant caractérisé:
- concernant la température de la solution de polymère vivant à l'extrémité supérieure 4 de la tour 2, c'est-à-dire pour la carbonatation, elle est proche de 20° C, et elle est atteinte par échange thermique dans la canalisation 3.
- concernant la réaction de carbonatation dans la tour 2, d'une part, par une pression amont donnée pour la solution de polymère vivant à l'entrée des orifices d'atomisation 5 et, d'autre part, par une pression de gaz carbonique ou pression aval à l'intérieur de la tour 2.

On notera que le gaz carbonique est introduit à l'état sec dans la tour 2 à l'emplacement de l'entrée 9, cela à une température proche de l'ambiante et sous une pression relative de 1 bar.

On a donc fait varier dans ces quatre essais les pertes de charge pour les orifices d'atomisation 5, c'est-à-dire les différences de pression hydrostatique, et, par conséquent, les conditions d'atomisation dans la tour 2;
- concernant la réaction de stoppage de la carbonatation dans la cuve 12, par un ajout de 2 équivalents lithium d'acide oxalique, acide suffisamment fort pour la protonation de la solution de polymère carbonaté et, par conséquent, l'obtention d'un polymère portant une fonction acide carboxylique en extrémité de chaîne.

On a réalisé cet ajout d'acide par atomisation dans les orifices 5 précités après avoir procédé à un dégazage de la tour 2 via la conduite 11, de telle manière que les gouttelettes d'acide ainsi émises permettent d'entraîner vers la cuve 12 les particules solides carbonatées qui sont restées au contact de la paroi de la tour 2 lors de la carbonatation.

On soumet ensuite le polymère ainsi carbonaté et protoné à un traitement antioxydant, par addition de 2,2'-méthylène bis(4-méthyl-6 tertiobutylphénol) (1 g pour 100 g d'élastomère), puis on le sèche à 50° C sous pression réduite.

On a procédé à une caractérisation des polymères ainsi obtenus par la technique de chromatographie d'exclusion par la taille (technique SEC). Cette technique consiste à séparer physiquement les macromolécules suivant leur taille à l'état gonflé, sur des colonnes remplies d'une phase stationnaire poreuse. On sépare les macromolécules par leur volume hydrodynamique, les plus volumineuses sortant en premier.

Sans être une méthode absolue, la SEC constitue un outil adapté pour appréhender la distribution des masses moléculaires d'un polymère. A partir de produits étalons dont les caractéristiques sont décrites dans le document de brevet européen EP-A-692 493, on détermine les différentes masses moyennes en nombre (Mn) et en poids (Mw) comme décrit dans ledit document, et on calcule l'indice de polydispersité (Ip = Mw/Mn ).

On solubilise l'échantillon de polymère à analyser dans du tétrahydrofuranne, à une concentration d'environ 1 g/l.

L'appareillage utilisé est un chromatographe WATERS de modèle « 150C ». Le solvant d'élution est le tétrahydrofuranne, le débit d'1ml/min., la température du système de 35° C et la durée d'analyse de 30 min. Le volume injecté de l'échantillon de polymère est de 100 µl. Le détecteur est un réfractomètre différentiel WATERS de modèle « R401 » et le logiciel d'exploitation des données chromatographiques est le système commercialisé sous la dénomination « WATERS MILLENIUM » (version 2.10).

Les chromatogrammes SEC obtenus révèlent la présence en quantité plus ou moins importante de chaînes ayant une masse supérieure à celle du polymère avant carbonatation. Un test à la 2,4-dinitrophénylhydrazine (2,4-DNPH) nous permet de montrer que ces chaînes correspondent au biadduit, c'est-à-dire à la cétone dimère (P)₂CO.

La 2,4-DNPH a été employée à cet effet, car elle présente l'avantage de former, après réaction avec la fonction cétone du biadduit, une hydrazone colorée qui peut être mise en évidence par spectroscopie au rayonnement ultraviolet. On fait réagir le polymère solubilisé dans le tétrahydrofuranne avec la 2,4-DNPH en milieu acide et au reflux pendant 1 heure. On récupère ensuite le polymère ainsi traité par coagulation dans le méthanol, et on le sèche à 50° C sous pression réduite. Une analyse SEC avec détection au rayonnement ultraviolet à 370 nm révèle une absorption sélective de la fraction de chaînes de plus haute masse, ce qui ne peut s'expliquer que par la présence d'une fonction hydrazone.

On a mesuré le taux de fonctions acide carboxylique en extrémité de chaîne par RMN¹H, après estérification avec un excès de diazométhane, réactif connu pour réagir avec les fonctions acide carboxylique.

Plus précisément, cette méthode consiste à obtenir, à l'aide du diazométhane, une fonction ester méthylique à partir de la fonction -COOH fixée en extrémité de chaîne du polymère, en vue d'accéder indirectement et de manière quantitative au taux de fonctions -COOH par RMN¹H.

On prépare au préalable le diazométhane par réaction de la potasse alcoolique sur la N-méthyl-N-nitroso-paratoluène sulfonamide, en présence de diéthyl éther et à la température de la glace fondante. On récupère ensuite la phase éthérée contenant le réactif par simple distillation.

On met ensuite en oeuvre la réaction d'estérification de la manière suivante.

On solubilise dans du toluène un échantillon de polymère ayant préalablement subi trois cycles de dissolution dans le toluène et coagulation dans le méthanol, puis un séchage sous pression réduite à 50° C. On ajoute ensuite à la solution ainsi obtenue la solution éthérée précitée contenant le diazométhane, de telle manière qu'il y ait un excès de réactif par rapport aux fonctions -COOH. On fait ensuite coaguler dans du méthanol le polymère ainsi traité, puis on le remet par deux fois en solution dans le toluène et dans le méthanol pour sa coagulation. On sèche ensuite le polymère dans un dessicateur, à température ambiante et sous vide poussé, au moyen d'une pompe à palettes.

On procède ensuite à l'analyse RMN¹H proprement dite de la manière suivante.

On solubilise dans du sulfure de carbone un échantillon du polymère ainsi estérifié. On utilise pour l'analyse du signal RMN¹H un spectromètre commercialisé sous la dénomination « BRUKER AC200 ». Le signal caractéristique des trois protons méthyliques de -COOCH₃ permet d'accéder quantitativement au taux initial de fonctions -COOH du polymère fonctionnel.

Le tableau ci-dessous rend compte des quatre essais réalisés pour ce premier exemple de réalisation de l'invention.

Pour chacun des essais, est indiquée en premier lieu la température de la réaction de carbonatation dans la tour 2, qui est pratiquement égale à la température de la solution de polymère vivant à l'entrée des orifices d'atomisation 5.

On a fait figurer dans ce tableau le pourcentage massique de biadduit. II est calculé en faisant le rapport entre la surface du pic correspondant au biadduit et l'aire totale de la surface située sous la courbe de distribution des masses moléculaires. Les surfaces sont fournies par le logiciel précité d'exploitation des données chromatographiques.

| **essais** | **température réaction carbonatation (° C)** | **P relative en amont des orifices d'atomisation (bar)** | **P relative dans la tour ou pression aval (bar)** | **perte de charge dans les orifices d'atomisation (bar)** | **% massique de biadduit déduit de l'analyse SEC** |
|---|---|---|---|---|---|
| 1 | 19 | ∼5,5 | 5 | ∼0,5 | ∼10% |
| 2 | 19 | 2 | 1 | 1 | ∼6% |
| 3 | 19 | 4 | 1 | 3 | entre 0 et 2 % |
| 4 | 18 | 8 | 4,5 | 3,5 | entre 0 et 2 % |

On notera que, de l'essai n°1 à l'essai n°4, l'augmentation de la perte de charge qui a été testée dans les orifices d'atomisation 5 (de 0,5 bar à 3,5 bar) s'accompagne d'une augmentation du débit massique de la solution atomisée, lequel évolue d'environ 4 à 17 kg/h de l'essai n°1 à l'essai n°4 et, par conséquent, d'une diminution de la taille des gouttelettes atomisées, en raison des différences de régimes d'écoulement dans ces orifices 5 en résultant.

Pour l'essai n°3 notamment, le taux de fonctions mesurée par RMN¹H selon la méthode décrite précédemment est de 265 méq/kg (milliéquivalent de fonctions par kg de gomme) ce qui, compte tenu de la masse moléculaire mesurée par tonométrie sur le polybutadiène avant réaction (3500 g/mol), correspond à un rendement de carbonatation de 92 %.

### Conclusions:

- Le pourcentage de biadduit, c'est-à-dire de cétone dimère P₂CO, est principalement maîtrisé par l'écart de pression entre l'amont et l'aval des orifices d'atomisation 5.
- La réaction de carbonatation est orientée vers la formation quasi-exclusive du monoadduit, c'est à dire du polymère comprenant une fonction acide carboxylique en extrémité de chaîne, lorsqu'on utilise des conditions de pression favorisant une atomisation la plus fine possible de la solution de polymère vivant.

### EXEMPLES 2 A 5:

### Synthèse de polymères de basses masses moléculaires comprenant une fonction acide carboxylique à chacune des deux extrémités de la chaîne

Dans ces exemples 2 à 5, l'initiateur de polymérisation est le composé dilithié 1,4-dilithiotétraphénylbutane (DLTB), dont le titre en liaisons carbone-lithium est déterminé par dosage Gilman (article J. Am. Chem. Soc. 66, 1515, 1944 précité).

Quant à l'installation utilisée, elle est la même que dans l'exemple 1 et la Fig. 1 précités, à ceci près que:
- la tour utilisée présente un diamètre de 230 mm et une hauteur, de 2200 mm;
- l'extrémité supérieure de la tour utilisée comporte, pour l'atomisation de la solution de polymère vivant, une seule buse (non représentée) qui est commercialisée par la société SPRAYING SYSTEMS sous la dénomination « UNIJET ». Cette buse présente un orifice d'atomisation du type « cône creux TX4 », c'est-à-dire de diamètre égal à 1 mm et de longueur égale à 0,86 mm. Cet orifice est adapté pour générer à sa sortie un liquide tourbillonnant, de section en forme de couronne et qui décrit un volume en forme de cône divergent creux.
- Cette même extrémité supérieure de la tour utilisée comporte, pour l'atomisation d'un acide fort en vue de la protonation du polymère carbonaté, une autre buse « UNIJET TX4 » (non représentée) et adjacente à la précédente.

Pour la description suivante des éléments d'installation relatifs aux exemples 2 à 5 qui présentent une structure identique à celle de l'exemple 1, on les identifiera par les mêmes références numériques que celles utilisées pour ledit exemple 1

### EXEMPLE 2:

### Synthèse d'un polybutadiène comprenant une fonction carboxylique à chaque extrémité de chaîne, avec une basse température pour la carbonatation (-3° C).

### 1. Synthèse d'un polybutadiène:

On effectue la polymérisation en discontinu dans un réacteur de 30 litres, tel que le réacteur 1 précité, et sous atmosphère inerte.

On introduit dans ce réacteur 1:
11,9 l de toluène désaéré,
1,086 kg de butadiène,
148 ml d'une solution de tétrahydrofuranne (THF) à 1,29 mol/l dans du toluène (1150 ppm)
446 ml d'une solution de DLTB à 0,975 mol/l dans du toluène, ce qui correspond à 0,04 mol de liaisons C-Li pour 100 g de butadiène.

La polymérisation est effectuée à une température de 40° C (à plus ou moins 2° C près). Au bout de 90 min., la conversion est totale. Le polymère obtenu a une masse moléculaire moyenne en nombre (Mn) mesurée par tonométrie qui est égale à 4600 g/mol. Le taux d'enchaînements vinyliques, déterminé par RMN¹H, est de 40 %.

### 2. Carbonatation du polymère:

On procède à un pré-refroidissement de la solution de polymère vivant ainsi synthétisée au moyen de l'enveloppe externe du réacteur 1, en vue de la carbonatation. Puis on ajoute à cette solution de polymère un volume de THF représentant 2,5 % du milieu réactionnel.

Puis la solution ainsi obtenue est encore refroidie jusqu'à l'obtention d'une température de -4° C pour la carbonatation, par échange thermique au moyen de la canalisation 3, puis introduite dans la buse unique d'atomisation précitée.

La pression relative en amont de la buse est de 9,4 bar et la pression relative dans la tour, ou pression aval, est maintenue à 1 bar par introduction de gaz carbonique via l'entrée 9 (toujours à l'état sec et à une température proche de l'ambiante). Il en résulte une perte de charge de 8,4 bar pour cette buse.

La température à l'extrémité supérieure de la tour 2, c'est-à-dire la température de carbonatation, est de -3° C. Le débit d'alimentation de la solution de polymère vivant est de 40 l/h. L'atomisation est effectuée au moyen de la buse unique précitée pendant 21 min., ce qui correspond à 14,2 1 de solution atomisée.

En sortie de cette buse unique, on obtient de très fines gouttelettes qui deviennent très rapidement solides au contact du gaz carbonique pour donner une solution de polymère carbonaté à l'aspect floconneux. Plus précisément, on notera que la taille moyenne des gouttelettes ainsi atomisées est inférieure à 100 µm.

Lorsque l'atomisation est terminée, on procède à un traitement de protonation de la solution de polymère carbonaté qui se différencie de celui de l'exemple 1, en ce que:
après avoir procédé à un dégazage de la tour, on atomise au moyen de la buse de protonation précitée, et sous une pression de 4 bar, 3,5 l d'une solution 1 mol/l d'acide chlorhydrique (HCl) dans du tétrahydrofurane, en même temps que l'on actionne l'agitateur 15 à une vitesse de 1400 t/min. Cette addition d'acide a pour effet de fluidifier le milieu, en cassant les associations entre extrémités carboxylate de lithium -COOLi, en particulier pour les particules solides carbonatées étant demeurées sur la paroi de la tour 2.

On maintient l'agitation pendant 10 minutes, puis on ajoute un antioxydant (1 g de N-phényl N'-diméthyl 1,3-dibutyl paraphénylènediamine pour cent g de polymère), avant de soutirer la solution obtenue. Ensuite, on lave à l'eau jusqu'à neutralité pour éliminer HCl en excès.

On sèche ensuite le polymère à 50° C sous pression réduite.

On caractérise par la technique SEC la solution de polybutadiène ayant réagi avec le gaz carbonique (appelée PB fonctionnel), en comparaison avec un échantillon prélevé avant introduction du gaz carbonique et protoné par addition de méthanol (appelé PB Témoin). Comme le montre le graphique ci-dessous, la fonctionnalisation n'a pas induit de modification notable de la distribution des masses moléculaires:

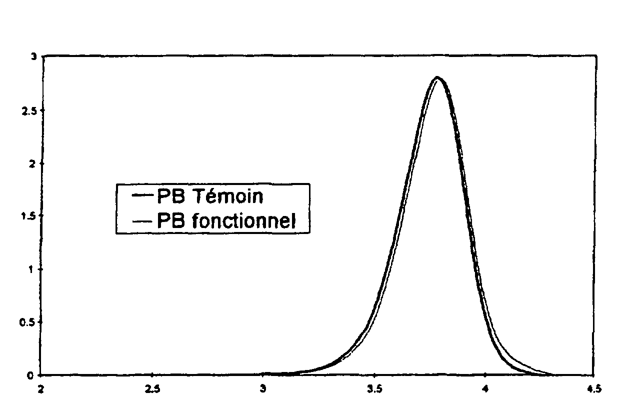

On calcule le taux de fonctions -COOH en mettant en oeuvre la méthode de dosage détaillée dans l'exemple 1. L'analyse RMN¹H donne un taux de fonction (-COOCH₃) de 367 méq/kg ce qui, compte tenu de la masse moléculaire mesurée par tonométrie sur le polybutadiène avant carbonatation (4600g/mol), correspond à un taux de fonctions de 85 %.

### EXEMPLE 3:

### Synthèse d'un polybutadiène comprenant une fonction carboxylique à chaque extrémité de chaîne, avec une température de carbonatation proche de la température ambiante (20°C).

La synthèse du polybutadiène est effectuée dans les mêmes conditions que celles décrites dans l'exemple 2. On obtient un polymère de masse moléculaire moyenne en nombre (Mn) mesurée par tonométrie égale à 4850 g/mol. Le taux d'enchaînements vinyliques, déterminé par RMN¹H, est de 41 %.

Comme dans l'exemple 2, on ajoute à la solution de polymère ainsi synthétisée un volume de THF correspondant à 2,5 % du milieu réactionnel. Ensuite, la solution de polymère est portée à 23° C par échange thermique au moyen de la canalisation 3, en vue de la carbonatation.

L'étape de carbonatation se déroule de la même manière que pour l'exemple 2, à la différence près que la température de la réaction de carbonatation est de 20° C. L'aspect de la solution atomisée de polymère en sortie de buse est comparable à celui décrit à l'exemple 2 (obtention de très fines gouttelettes qui se solidifient au contact du gaz carbonique).

Le reste des opérations s'effectue comme décrit à l'exemple 2.

L'analyse SEC rapportée dans le graphique ci-dessous montre que la fonctionnalisation n'a pas induit de modification notable de la distribution des masses moléculaires:

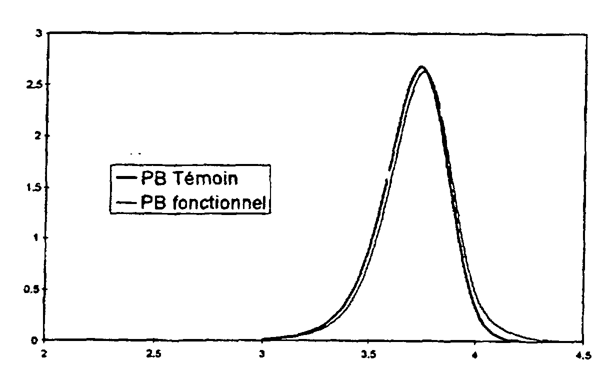

L'analyse RMN¹H donne un taux de fonctions (-COOCH₃) de 367 méq/kg ce qui, compte tenu de la masse moélculaire mesurée par tonométrie sur le polybutadiène avant carbonatation (4850 g/mol), correspond à un taux de fonctions de 89 %.

### EXEMPLE 4:

### Synthèse d'un polybutadiène comprenant une fonction carboxylique à chaque extrémité de chaîne, avec une haute température de carbonatation (81° C).

La synthèse du polybutadiène est effectuée dans les mêmes conditions que celles décrites dans l'exemple 2. On obtient un polymère de masse moléculaire moyenne en nombre (Mn) mesurée par tonométrie égale à 4900 g/mol. Le taux d'enchaînements vinyliques, déterminé par RMN¹H, est de 40 %.

La solution de polymère est ici portée à 18° C puis, comme dans l'exemple 2, on ajoute un volume de THF correspondant à 2,5 % du milieu réactionnel.

Au moyen de la canalisation 3, on élève la température de cette solution jusqu'à l'obtention d'une température de 81° C pour la carbonatation. A cet effet, on utilise pour l'échange thermique correspondant de l'eau entrant à 95° C dans l'enveloppe externe de cette canalisation 3.

L'opération de carbonatation se déroule de la même manière que dans l'exemple 2, à la différence près que la température à l'extrémité supérieure de la tour est de 81° C. Dans cet exemple 4, on obtient une atomisation que l'on qualifiera de plus fine que dans les exemples 2 et 3, puisqu'on observe la formation d'un brouillard en sortie de buse qui se solidifie au contact du gaz carbonique.

Le reste des opérations s'effectue comme décrit à l'exemple 2.

L'analyse SEC rapportée dans le graphique ci-dessous montre que, dans ce cas, le contrôle de la réaction de fonctionnalisation est un peu moins satisfaisant: il apparaît pour le polymère carbonaté un élargissement de la distribution des masses moléculaires vers les hautes masses, ce qui indique des réactions parasites à la fonctionnalisation:

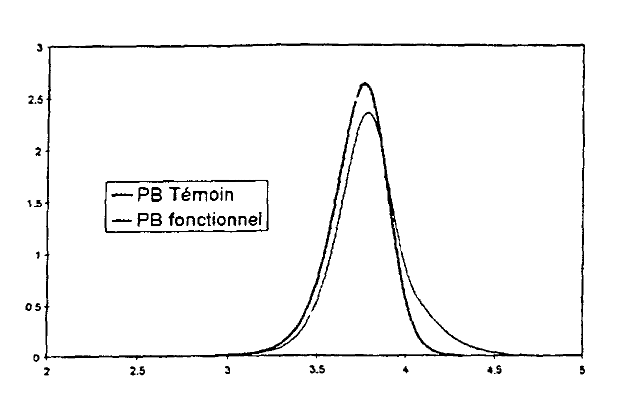

L'analyse RMN¹H après estérification au diazométhane, selon la méthode détaillée à l'exemple 1, donne un taux de fonctions (-COOCH₃) de 317 méq/kg. En prenant la masse moléculaire déterminée par tonométrie sur le polybutadiène avant fonctionnalisation, on obtient un taux de fonctions voisin de 80 %.

### Conclusions par comparaison des exemples 2, 3 et 4:

### Exemples 3 et 4:

### Effets de la température et de la viscosité dynamique caractérisant la solution de polymère à carbonater.

On observe que la taille moyenne des gouttelettes correspondant à la solution atomisée est d'autant plus réduite que la température de ladite solution est plus élevée, c'est-à-dire que la viscosité dynamique de celle-ci est plus faible. Cependant, on observe à 80° C des réactions parasites qui sont inexistantes à 20° C et à -3° C.

### Exemples 2, 3 et 4:

On observe qu'un abaissement de la température favorise la fonctionnalisation COOH, malgré une dispersion moins importante du milieu réactionnel. Ce résultat est conforme à l'état de la technique, puisqu'à très basse température (-78° C), on peut effectuer la réaction dans un milieu continu, comme cela est rapporté dans la référence Macromolécules, vol. 22, p. 85, 1989 précitée.

### EXEMPLE 5:

### Synthèse d'un copolymère styrène-butadiène comprenant une fonction carboxylique à chaque extrémité de chaîne, avec une basse température (-1° C) de la solution à carbonater:

On effectue la polymérisation en discontinu dans un réacteur de 30 litres, tel que le réacteur 1 précité, et sous atmosphère inerte.

On introduit dans le réacteur:
11,039 l de toluène désaéré,
644 g de butadiène,
362 g de styrène,
137 ml d'une solution de tétrahydrofurane à 1,29 mol/l dans du toluène (1150 ppm), et
433 ml d'une solution de DLTB à 0,93 mol/l dans du toluène, ce qui correspond à 0,04 mol de liaisons C-Li pour 100 g de monomère.

La polymérisation est effectuée à une température de 40° C (à plus ou moins 2° C près). Au bout de 90 min., la conversion est totale. Le polymère obtenu a une masse moléculaire moyenne en nombre (Mn), mesurée par tonométrie, qui est égale à 4960 g/mol. Le pourcentage de styrène incorporé, mesuré par RMN¹H, est de 37 % et le taux d'enchaînements vinyliques est de 42 % pour la partie butadiénique.

On amène à 20° C la température du milieu réactionnel, puis on y ajoute un volume de THF correspondant à 2,5 % du volume total. On abaisse ensuite la température de la solution de polymère obtenue à -5° C, de manière analogue à celle décrite à l'exemple 2, cela en vue de la carbonatation.

L'opération de carbonatation se déroule de la même manière que dans l'exemple 2, à la différence près que la température à l'extrémité supérieure de la tour est de -1° C. En sortie de buse, on observe la formation d'un brouillard qui se solidifie rapidement au contact du gaz carbonique.

Le reste des opérations s'effectue comme décrit à l'exemple 2.

L'analyse SEC montre que la fonctionnalisation n'induit pas de modification de la distribution des masses moléculaires, les indices de polydispersité (Ip) des polymères avant et après la réaction avec le gaz carbonique étant identiques (Ip=1,21).

L'analyse RMN¹H après estérification au diazométhane, selon la méthode détaillée à l'exemple 1, donne un taux de fonctions (-COOCH₃) de 318 méq/kg ce qui, compte tenu de la masse moléculaire mesurée par tonométrie sur le copolymère styrène-butadiène avant réaction (4960 g/mol), correspond à un taux de fonctions de 79 %.

Concernant ces exemples 2 à 5, on notera que l'atomisation de la solution de polymère vivant sous la forme d'un jet en forme de cône creux favorise l'interaction entre le gaz carbonique et les gouttelettes résultant de cette atomisation, en comparaison d'une atomisation sous la forme d'un cône plein, par exemple.

## Revendications

1. Procédé de carbonatation d'un polymère diénique vivant obtenu par voie anionique, du type consistant à atomiser par au moins une buse (5) dans une enceinte (2), sous forme de gouttelettes et au contact de gaz carbonique, une solution dudit polymère dans un bain sensiblement au repos remplissant ladite enceinte (2) et constitué dudit gaz carbonique, de telle manière que ladite solution atomisée et ledit bain interagissent pour ladite carbonatation, **caractérisé en ce qu'**il consiste à atomiser ladite solution par la seule différence de pression hydrostatique entre l'entrée de ladite ou de chaque buse (5) et l'intérieur de ladite enceinte (2).

2. Procédé selon la revendication 1, **caractérisé en ce qu'**il consiste à utiliser, pour ladite différence de pression hydrostatique, une valeur allant de 10⁵ Pa à 10. 10⁵ Pa.

3. Procédé selon la revendication 1 ou 2, **caractérisé en ce qu'**il consiste à atomiser dans ladite enceinte (2) ladite solution de polymère vivant à une température comprise entre -50° C et 100° C.

4. Procédé selon une des revendications précédentes, **caractérisé en ce qu'**il consiste à utiliser, pour la pression relative du gaz carbonique dans ladite enceinte (2), une pression comprise entre 0,01. 10⁵ et 10. 10⁵ Pa.

5. Procédé selon une des revendications précédentes, **caractérisé en ce qu'**il consiste à atomiser ladite solution de polymère vivant sous la forme d'un jet de gouttelettes sensiblement en forme de cône creux présentant une section en forme de couronne, de telle manière que lesdites gouttelettes présentent une taille moyenne inférieure à 100 µm.

6. Procédé selon une des revendications précédentes, **caractérisé en ce qu'**il consiste à utiliser une tour à titre d'enceinte (2), de telle manière que ladite atomisation soit prévue dans une partie supérieure (4) de ladite tour (2) et qu'une solution de polymère carbonaté soit recueillie dans une partie inférieure de ladite tour (2).

7. Procédé selon la revendication 6, **caractérisé en ce qu'**il consiste à introduire le gaz carbonique par au moins une entrée latérale (9) prévue dans ladite partie inférieure de ladite tour (2).

8. Procédé selon une des revendications précédentes, **caractérisé en ce qu'**il consiste à utiliser une viscosité newtonienne inférieure à 2 Pa.s pour ladite solution de polymère vivant, pour son atomisation.

9. Procédé selon une des revendications précédentes, **caractérisé en ce qu'**il consiste à stopper ultérieurement ladite carbonatation dans ladite enceinte (2) en faisant réagir en milieu agité la solution de polymère carbonaté avec un acide suffisamment fort, pour obtenir un polymère carbonaté portant à sa ou ses extrémités de chaîne une ou plusieurs fonctions acide carboxylique.

10. Procédé selon la revendication 9, **caractérisé en ce qu'**il consiste à agiter ladite solution de polymère carbonaté dans une cuve (12) qui communique avec ladite enceinte (2), et à atomiser en même temps ledit acide sous forme de gouttelettes en direction de ladite cuve (12).

11. Procédé selon les revendications 9 et 10, **caractérisé en ce qu'**il consiste à atomiser ledit acide par au moins une buse (5) prévue dans ladite partie supérieure (4) de ladite tour (2), de telle manière que les gouttelettes d'acide puissent entraîner en direction de ladite cuve (12) les particules carbonatées demeurées sur la paroi latérale de ladite tour (2).

## Claims

1. A process for carbonation of a living diene polymer obtained anionically, of the type consisting in spraying a solution of said polymer through at least one nozzle (5) into a chamber (2), in the form of droplets and in contact with carbon dioxide, into a bath which is substantially at rest filling said chamber (2) and formed of said carbon dioxide, such that said sprayed solution and said bath interact for said carbonation, **characterised in that** it consists in spraying said solution merely by the difference in hydrostatic pressure between the inlet to said or each nozzle (5) and the interior of said chamber (2).

2. A process according to Claim 1, **characterised in that** it consists in using, for said difference in hydrostatic pressure, a value from 10⁵ Pa to 10x10⁵ Pa.

3. A process according to Claim 1 or 2, **characterised in that** it consists in spraying said solution of living polymer into said chamber (2) at a temperature of between -50°C and 100°C.

4. A process according to one of the preceding claims, **characterised in that** it consists in using, for the relative pressure of the carbon dioxide in said chamber (2), a pressure of between 0.01x10⁵ and 10x10⁵ Pa.

5. A process according to one of the preceding claims, **characterised in that** it consists in spraying said solution of living polymer in the form of a jet of droplets substantially in the form of a hollow cone having a crown-shaped section, such that said droplets have an average size of less than 100 µm.

6. A process according to one of the preceding claims, **characterised in that** it consists in using a tower as the chamber (2), such that said spraying is provided in an upper part (4) of said tower (2) and that a solution of carbonated polymer is collected in a lower part of said tower (2).

7. A process according to Claim 6, **characterised in that** it consists in introducing the carbon dioxide via at least one side inlet (9) provided in said lower part of said tower (2).

8. A process according to one of the preceding claims, **characterised in that** it consists in using a Newtonian viscosity of less than 2 Pa.s for said solution of living polymer for the spraying thereof.

9. A process according to one of the preceding claims, **characterised in that** it consists in subsequently stopping said carbonation in said chamber (2) by reacting, in a stirred medium, the solution of carbonated polymer with a sufficiently strong acid, in order to obtain a carbonated polymer bearing at its chain end or ends one or more carboxylic acid functions.

10. A process according to Claim 9, **characterised in that** it consists in stirring said solution of carbonated polymer in a tank (12) which communicates with said chamber (2), and at the same time spraying said acid in the form of droplets in the direction of said tank (12).

11. A process according to Claims 9 and 10, **characterised in that** it consists in spraying said acid through at least one nozzle (5) provided in said upper part (4) of said tower (2), such that the droplets of acid can entrain the carbonated particles which have remained on the side wall of said tower (2) towards said tank (12).

## Patentansprüche

1. Verfahren zur Carboxylierung eines auf anionischem Wege hergestellten lebenden Dienpolymers des Typs, bei dem eine Lösung des Polymers in einem im Wesentlichen ruhenden Bad, das eine Kammer (2) füllt und aus Kohlendioxid besteht, durch eine Düse (5) in der Kammer (2) in Form von Tröpfchen und in Kontakt mit dem Kohlendioxid so zerstäubt wird, dass die zerstäubte Lösung und das Bad für die Carboxylierung miteinander wechselwirken,
**dadurch gekennzeichnet, dass**
es darin besteht, die Lösung nur durch den Unterschied des hydrostatischen Drucks am Einlass der Düse oder jeder Düse (5) und im Inneren der Kammer (2) zu zerstäuben.

2. Verfahren nach Anspruch 1, **dadurch gekennzeichnet, dass** es darin besteht, für den Unterschied des hydrostatischen Drucks einen Wert von 10⁵ bis 10 · 10⁵ Pa einzustellen.

3. Verfahren nach Anspruch 1 oder 2, **dadurch gekennzeichnet, dass** es darin besteht, in der Kammer (2) die Lösung des lebenden Polymers bei einer Temperatur im Bereich von -50 bis 100 °C zu zerstäuben.

4. Verfahren nach einem der vorhergehenden Ansprüche, **dadurch gekennzeichnet, dass** es darin besteht, als relativen Kohlendioxiddruck in der Kammer (2) einen Druck von 0,01 · 10⁵ bis 10 · 10⁵ Pa einzustellen.

5. Verfahren nach einem der vorhergehenden Ansprüche, **dadurch gekennzeichnet, dass** es darin besteht, die Lösung des lebenden Polymers in Form eines Strahls von Tröpfchen im Wesentlichen in Form eines Hohlkegels mit einem kranzförmigen Querschnitt so zu zerstäuben, dass die Tröpfchen eine mittlere Größe unter 100 µm aufweisen.

6. Verfahren nach einem der vorhergehenden Ansprüche, **dadurch gekennzeichnet, dass** es darin besteht, als Kammer (2) einen Turm zu verwenden, sodass die Zerstäubung in einem oberen Bereich (4) des Turms (2) erfolgt und eine Lösung des carboxylierten Polymers in einem unteren Bereich des Turms (2) gesammelt wird.

7. Verfahren nach Anspruch 6, **dadurch gekennzeichnet, dass** es darin besteht, Kohlendioxid durch mindestens einen seitlichen Einlass (9) zuzuführen, der im unteren Bereich des Turms (2) vorgesehen ist.

8. Verfahren nach einem der vorhergehenden Ansprüche, **dadurch gekennzeichnet, dass** es darin besteht, für die Lösung des lebenden Polymers zur Zerstäubung eine Newtonsche Viskosität unter 2 Pa · s einzustellen.

9. Verfahren nach einem der vorhergehenden Ansprüche, **dadurch gekennzeichnet, dass** es darin besteht, die Carboxylierung in der Kammer (2) schließlich zu stoppen, indem die Lösung des carboxylierten Polymers in einem Medium unter Rühren mit einer Säure umgesetzt wird, die ausreichend stark ist, damit ein carboxyliertes Polymer erhalten wird, das an seinem Kettenende oder seinen Kettenenden eine oder mehrere Carboxyfunktionen aufweist.

10. Verfahren nach Anspruch 9, **dadurch gekennzeichnet, dass** es darin besteht, die Lösung des carboxylierten Polymers in einem Behälter (12), der mit der Kammer (2) in Verbindung steht, zu rühren und gleichzeitig die Säure in Form von Tröpfchen in Richtung des Behälters (12) zu zerstäuben.

11. Verfahren nach den Ansprüchen 9 und 10, **dadurch gekennzeichnet, dass** es darin besteht, die Säure durch mindestens eine Düse (5), die im oberen Bereich (4) des Turms (2) vorgesehen ist, so zu zerstäuben, dass die Säuretröpfchen die carboxylierten Partikel, die sich noch an der Seitenwand des Turms (2) befinden, in Richtung des Behälters (12) mitzureißen.
